# EUROPEAN PATENT APPLICATION

(11) **EP 1 075 801 A1**
(43) Date of publication of application: **14.02.2001**
(21) Application number: 99115899.9
(22) Date of filing: 12.08.1999
(51) Int. Cl.: A43B 9/16, B29D 31/512, A43D 35/00

(54) **Manufacturing process for a foamed integral shoe body**

(71) Applicant: Chi, Cheng-Hsian, Taichung, Taiwan, R.O.C. (TW)
(72) Inventor: Chi, Cheng-Hsian, Taichung, Taiwan, R.O.C. (TW)
(74) Representative: Pohlmann, Eckart, Dipl.-Phys.

(57) **Abstract**

A manufacturing process for a foamed integral shoe body comprises the steps of: a highly heated insole (20) is adhered to the bottom part of a instep (10); the peripheral border of the insole is tightly adhered in a receiving room between the instep and a decorative layer; a pull thread (17) is tied up to ensure the insole (20) is firmly fixed under the decorative layer (15); a sole is located at a lower mold (40); when the shoe rest (50) of a shoe press and the lower mold (40) are actuated by a hydraulic or air cylinder, the instep (10), the insole (20) and the sole (30) are integrally pressed together to form the shoe body; at the same time, two sided mold (45) located at both sides of the lower mold are actuated by the hydraulic or air cylinder to close synchronously; a specific outline and pattern are integrally formed onto the insole (20) and the decorative layer (15) upon pressing two sided molds (45); and cool down and open the molds to take out the finished shoe body.

## Description

### BACKGROUND OF THE INVENTION

### 1. Field of the Invention

The present invention relates to a manufacturing process for a foamed integral shoe body.

### 2. Description of Related Art

A common sports shoe usually has a sole body made of foaming material containing ethylene vinyl acetate (EVA) and the sole body comprises an insole, a sole glued to the insole, and a peripheral ornamental strip glued around the insole. The foaming material is formed by that a stirred mixture consisting of predetermined proportions of EVA, foaming agent, and bridge agent is foamed by heat. Therefore, the foaming material offers the shoe a better elasticity and durability. In addition, it is able to absorb unfavorable shocks, and it is comfortable for the user to wear the shoe.

The present inventor has disclosed a "Production Method for EVA Insoles with Peripheral Borders" (Taiwan Patent Publication No. 287091), in which a manufacturing process for foamed insole is taught. Therein, a foamed insole is surrounded and glued by an ornamental strip. The present inventor has also disclosed a "Production Method for Peripheral Ornamental stripes for foamed insoles" (U.S. Patent No. 5,843,352), in which a manufacturing process of ornamental strips is introduced. In the method, a mixed foaming material is made into a scale-down blank of ornamental strip. Then, the blank is put in a heat forming mold or pattern embossing mold of reduced or equal scale to yield an ornamental strip or a pattern embossed strip. But, it can be understood that the insole and the ornamental strip in addition to a sole have to be foamed into shape separately before they are glued together to form a sole body. Therefore, The prior art not only requires expensive mold but also offers complicated processing steps. Furthermore, the ornamental strip, the insole and the sole are glued together by heat rather than foamed into a single body. It is possible for the joints among the ornamental strip, the insole, and the sole to loose easily during rapid movements such that the ornamental strip easily falls off. In order to overcome the drawbacks described above, the conventional manufacturing process for a sole body has to be improved effectively such that the heat glue part is reduced and the integral foaming part is increased to intensify the integral construction of the sole body.

### SUMMARY OF THE INVENTION

It is the object of the present invention to provide a manufacturing process for a foamed integral shoe body with which the foamed shoe body can obtain an increased strength and it is possible to allow a variety of shapes for the shoe body.

Another object of the present invention is to provide a manufacturing process for a foamed integral shoe body with which a shortened manufacturing process can be reached such that it is possible to minimize the production cost.

A further object of the present invention is to provide a manufacturing process for a foamed integral shoe body with which a better quality of the shoe body gluing with the border part can be attained and thus gives a much more appealing outlook.

The present invention can be more fully understood by reference to the following description and accompanying drawings.

### BRIEF DESCRIPTION OF THE DRAWINGS

Fig. 1 is an exploded perspective view of a foamed shoe body in parts and part of a mold tool set applied by a manufacturing process according to the present invention.

Fig. 2 is an exploded perspective view of a lower mold and two sided molds applied by a manufacturing process according to the present invention.

Fig. 3 is a top plan view of Fig.2.

Fig. 4 is a perspective view of the bottom part of an instep with a decorative layer sewed onto the outer edge thereof.

Fig. 5 is a perspective view showing the decorative layer having been sewed onto the instep.

Fig. 6 is a sectional view of the instep, the decorative layer and an insole in a state of separating apart.

Fig. 7 is an another sectional view of the instep, the decorative layer and the insole to illustrate the decorative layer being sewed or glued to the outer edge of the instep.

Fig. 8 is a further sectional view of the instep, the decorative layer and the insole to illustrate the insole being adhered and covered to the bottom and the outer edge of the instep.

Fig. 9 is a further sectional view of the instep, the decorative layer and the insole to illustrate the decorative layer integrally wrapping the insole and being located at the bottom of the instep.

### DETAILED DESCRIPTION OF THE PREFERRED EMBODIMENTS

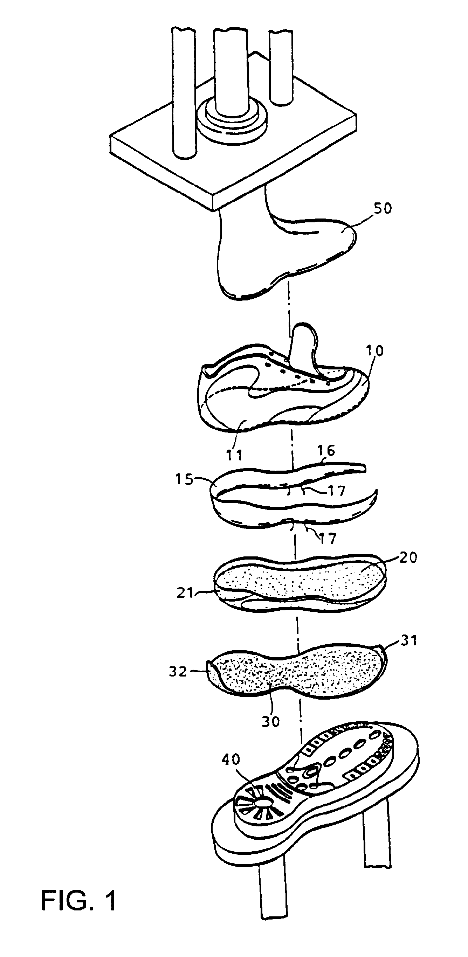

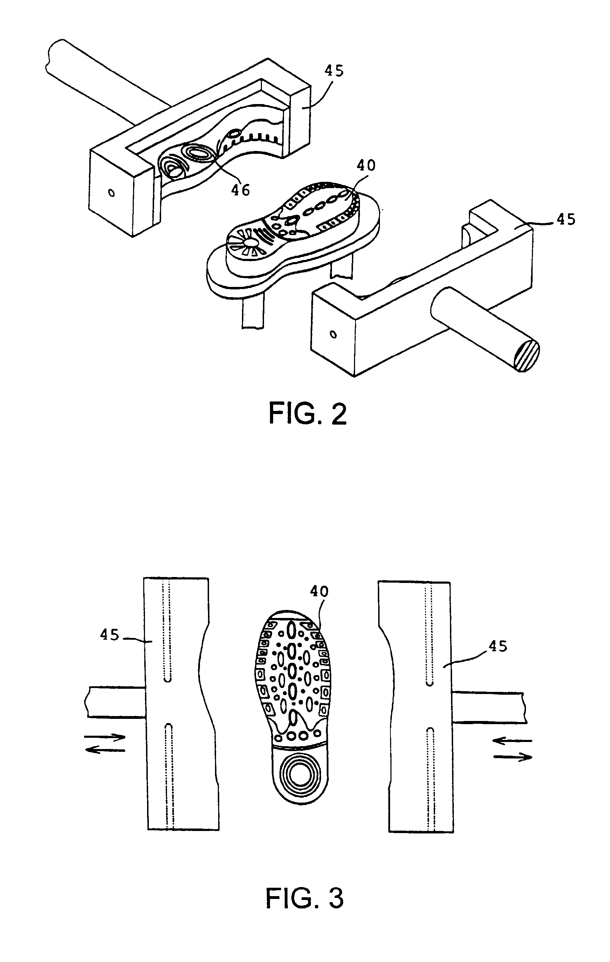

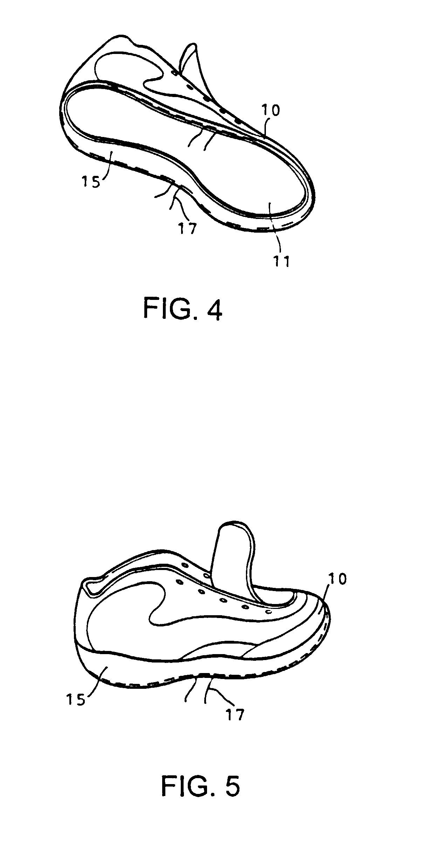

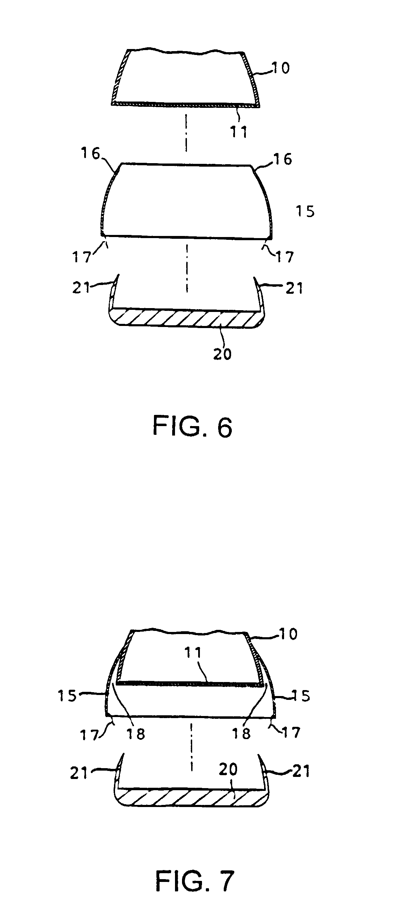

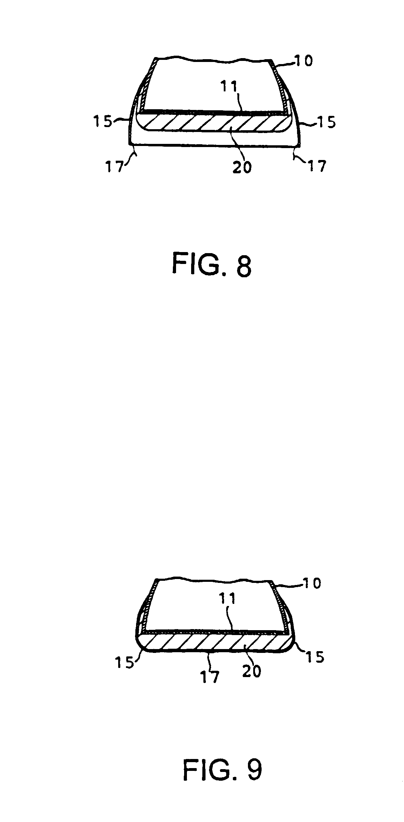

Referring to Fig. 1 to Fig. 9, a manufacturing process for making a foamed integral shoe body according to the present invention is illustrated. The manufacturing process comprises the following steps: an instep 10 is integrally provided with a bottom pad 11 at the bottom thereof and a thin decorative layer 15 is surrounded the outer edge of instep 10 and then sewed or glued onto the instep 10; the decorative layer 15 is a thin slice of thermal plastic material, which has a specific outline and colors and the upper edge thereof is sewed or glued the outer edge of the instep 10 (as shown in Fig. 7); a receiving room 18 is formed between the decorative layer and the outer edge of the instep 10; a pull thread 17 is provided at the lower edge of the decorative layer 15 to allow the instep 10 being integrally fitted onto the shoe rest 50 on a shoe press; the highly heated insole 20 is then adhered to the bottom of the instep 10; the peripheral border of the insole 20 is then tightly adhered to the receiving room 18 (as shown in Fig. 8); thus, the insole 20 is covered completely under the bottom 11 and the decorative layer 15. When the manufacturing process is operated according to the present invention, the pull thread 17, which surrounds the bottom edge of decorative layer 15, can be tied up to ensure that the highly heated insole 20 is fixedly covered by the decorative layer 15 (as shown in Fig. 9). Therefore, subsequent steps such as pattern embossing and forming can be proceeded successfully.

Furthermore, the bottom part of the insole 20 is coated with hot glue melt; a sole 30 is provided at the lower mold 40 of a mold set; the sole 30 is also coated with hot glue melt at the top part thereof; when the sole rest 50 and the lower mold 40 are actuated by a hydraulic cylinder air cylinder to move up and down, the instep 10, the highly heated insole 20 and the sole 30 then are pressed and glued together; in the mean time, the two sided molds, which are located at a place near the lower mold 40, can be actuated by a hydraulic cylinder or an air cylinder respectively to move synchronously; since the wall surfaces on the two sided molds 45 are provided with embossed patterns and both the insole 20 and the decorative layer 15 are made of thermal plastic materials, these lead to the shoe body being formed a specific shape and an embossed pattern; if necessary, the sided molds 45 can be preheated to enhance the effect of the embossed pattern on the shoe body; After the mold is cooled, open the molds and the integral foamed shoe body in the mold can be removed finally.

It is noted that the present invention allows parts of the shoe body to be integrally formed with the outer edge thereof and the embossed pattern molded at the same time. The present invention not only increases the strength of the foamed shoe body but also gives a variety of the shoe body. In addition, the present invention shortens the processing steps such that a tremendously decreased material cost can be reached. It is clearly shown the insole 20 being covered by the decorative layer 15, and it is possible for the insole 20 to be made of a recyclable material such as ethylene vinyl acetate. This allows the material cost of the shoe body to be reduced even further and to meet environmental protection requirements. In addition, the insole 20 in a state of high temperature is pressed together with the sole 30 in the process of forming a shoe body such that an intensified strength of the glued shoe body can be obtained. Moreover, the gluing quality of the shoe body can be enhanced and gives the shoe body a much more appealing outlook.

As for some of the soles 30 having a structure with a front border part 31 and a back border part 32 (as shown in Fig. 1), both border parts 31, 32 are adhering to the front and back ends of the instep 10 respectively to reinforce the entire strength for the instep 10. The present manufacturing process makes the front border part 31 and the back border part 32 firmly pressing onto the front and back ends of the instep respectively at the time of closing the mold. This can be done by using bias parts (not shown in the figure), which are located at the two sided molds 45, to press against the front boraer part 31 and the back border part 32. When the two sided molds 45 are at the time of closing mold or opening mold positions, the bias parts press onto or release from the front border part 31 and the back border cart 32 respectively. This makes the gluing strength between both ends of the soles 30 and the instep 10 greatly reinforced.

Another embodiment according to the present invention discloses a recess (not shown in the figures), which is provided at a place between the heel part of the sole 30 and the foamed insole 20, to receive a shock absorbing part such as an air pad. The arrangement makes a better shock absorbing ability for shoes. The shoe rest 50 on the shoe press can be mounted inversely such that the order will be from bottom to top with the instep 10 at the bottom, then the heated up insole 20, following with a shock absorbing part and finally a sole 30. It is then able to meet the needs of making an integrally pressed shoe body.

With respect to the material of the insole, the ethylene vinyl acetate mixture can be chosen and it can be made in two ways. One is to have a specific scaled down insole blank is heated up to a temperature of 180°C, then it is integrally expanded to a full-scaled insole structure. The other way is to cut the fully expanded foam to a desired insole structure and then placed in a heater to heat up the insole 20 to reach a highly heated status. It is then removed and surrounded by the decorative layer 15 of thermal plastics. Thus, the outer shape of a shoe with embossed patterns can then be formed. In order to produce a precise and complicated around the outer edge of the insole 20, it is needed to increase the thickness of the insole 20 at the outer edge thereof or create many tiny air openings locally on the inner wall of the two sided molds. In addition, the two sided molds 45 can also be partially preheated. Thus, when the outer edge of the insole 20 is being molded to produce precise and complicated embossed patterns, the excess air can be released out of the molds smoothly. This then allows the outer edge of the insole 20 to have a better molding temperature, and thus increase the quality and precision of the molded products. Therefore, the invention can make use of the recyclable and low cost ethylene vinyl acetate as the material for making the insole blank. Furthermore, the decorative layer 15 of thermal plastics is adopted to surround the insole blank such that a variety of shapes and colors for the shoe body structure can be obtained. The product quality then can be promoted and the appealing outlook of the product can be enhanced.

While the invention has been described with reference to preferred embodiments thereof, it is to be understood that modifications or variations may be easily made without departing from the scope and spirit of this invention which is defined by the appended claims.

## Claims

1. A manufacturing process for a foamed integral shoe body comprising the steps of:
an instep with a bottom pad being sewed or glued at the outer edge thereof with the top part of a decorative layer; a receiving room being formed between said outer edge and said decorative layer; said decorative layer having a pull thread surrounding the bottom part thereof;
a highly heated insole being then adhered to the bottom part of said instep; the peripheral border of said insole being tightly adhered in said receiving room; said pull thread being tied up to ensure said insole firmly being fixed under said decorative layer;
a sole being located at a lower mold of a mold set; when the shoe rest of the shoe press and said lower mold being actuated by a hydraulic or air cylinder, said instep, said insole and said sole being integrally pressed together to form said shoe body;
at the same time, two sided mold of said mold set located at both sides of said lower mold being actuated by said hydraulic or air cylinder to close synchronously with said lower mold and an upper mold; because said two sided molds being provided with desired embossed patterns at the wall surfaces thereof, a specific outline and pattern being integrally formed onto said insole and said decorative layer upon pressing said two sided molds; and
cooling down said mold set and opening said mold to take out the finished shoe body.

2. A manufacturing process for a foamed integral shoe body according to claim 1, wherein said decorative layer is made of thermal plastic material, and has a specific outline with colors.

3. A manufacturing process for a foamed integral shoe body according to claim 1, wherein said pull thread is tied up to ensure said insole is firmly fixed under said decorative layer.

4. A manufacturing process for a foamed integral shoe body according to claim 1, wherein the material of said insole can be replaced by the recyclable ehylene vinyl acetate.

5. A manufacturing process for a foamed integral shoe body according to claim 1, wherein each of said two sided molds has a bias part respectively to press a front border part and a back border part on said sole upon closing said two sided molds.

6. A manufacturing process for a foamed integral shoe body according to claim 1, wherein said insole is made from scaled down insole blank and heated up to 180°C, then expanded to a full scaled size.

7. A manufacturing process for a foamed integral shoe body according to claim 1, wherein said insole is cut from a fully expanded foam of desired insole, and then placed in a heater to increase the temperature of said insole to reach a state of highly heated up.

8. A manufacturing process for a foamed integral shoe body according to claim 1 comprising the steps of:
an instep with a bottom pad, being integrally fitted onto a shoe rest of a shoe press, and said bottom pad being coated with hot glue melt;
a sole, being located at a lower mold of a mold set and the top part of said sole being coated with hot glue melt;
an insole being located at a lower mold of a mold set; when the shoe rest of the shoe press and said lower mold being actuated by a hydraulic or air cylinder, said instep, said insole and said sole being integrally pressed together to form said shoe body;
at the same time, two sided mold of said mold set located at both sides of said lower mold being actuated by said hydraulic or air cylinder to close synchronously with said lower mold and an upper mold; because said two sided molds being provided with desired embossed patterns at the wall surfaces thereof, a specific outline and pattern being integrally formed onto said insole and said decorative layer upon pressing said two sided molds; and
cooling down said mold set and opening said mold to take out the finished shoe body.

9. A manufacturing process for a foamed integral shoe body according to claim 1 comprising the steps of:
an instep with a bottom pad, being integrally fitted onto a shoe rest of a shoe press, and said bottom pad being coated with hot glue melt;
a sole, being located at a lower mold of a mold set and the top part of said sole being coated with hot glue melt; and
a highly heated insole being placed at top surface of said sole; when the shoe rest of the shoe press and said lower mold being actuated by a hydraulic or air cylinder, said instep, said insole and said sole being integrally pressed together to form said shoe body.
